# EUROPÄISCHE PATENTSCHRIFT

(11) **EP 0 565 597 B1**
(45) Veröffentlichungstag und Bekanntmachung des Hinweises auf die Patenterteilung: **02.11.1994**
(21) Anmeldenummer: 92902977.5
(22) Anmeldetag: 27.12.1991
(51) Int. Cl.: H04B 11/00

(54) **VERFAHREN UND VORRICHTUNG ZUM ÜBERTRAGEN EINES INFORMATIONSSIGNALS**
SIGNAL-TRANSMISSION METHOD AND DEVICE
PROCEDE ET DISPOSITIF POUR LA TRANSMISSION D'UN SIGNAL D'INFORMATION

(30) Priorität: 04.01.1991 DE 4100134
(43) Veröffentlichungstag der Anmeldung: 20.10.1993
(73) Patentinhaber: BROSOW, Jörgen, A-5322 Hof (AT)
(72) Erfinder: BROSOW, Jörgen, A-5322 Hof (AT)
(74) Vertreter: Patentanwälte Leinweber & Zimmermann
(86) Internationale Anmeldenummer: EP9102514
(87) Internationale Veröffentlichungsnummer: WO9212581

(56) Entgegenhaltungen:
- DE-A- 2 656 969
- US-A- 3 806 862
- US-A- 3 958 215
- US-A- 4 039 999

## Beschreibung

Die Erfindung bezieht sich auf ein Verfahren zum Übertragen eines Informationssignals unter Wasser von einem an einem ersten Ort befindlichen Sender zu einem an einem davon entfernten zweiten Ort befindlichen Empfänger, bei dem in dem Sender durch Modulation eines Ultraschallträgersignals vorgegebener Frequenz mit dem Informationssignal ein an das Wasser abgegebenes moduliertes Ultraschallträgersignal mit einem festen Wert der Amplitude gebildet und in dem Empfänger das aus dem Wasser aufgenommene, modulierte Ultraschallträgersignal zur Rückgewinnung des Informationssignals demoduliert wird, sowie auf eine Vorrichtung zur Durchführung dieses Verfahrens.

Bei einem derartigen bekannten Verfahren (DE-A-2 656 969) wird das durch eine Gegentaktschaltung monostabiler Multivibratoren gewonnene, rechteckförmige Ultraschallträgersignal frequenzmoduliert und anschließend in einer Endstufe in ein sinusförmiges frequenzmoduliertes Ausgangssignal umgewandelt, das an das Wasser abgestrahlt wird. Infolge seiner Frequenzmodulation weist dabei das abgestrahlte modulierte Ultraschallträgersignal einen festen Wert der Amplitude auf.

Ein anderes bekanntes Verfahren, das für die Unterwassersignalisierung zwischen Wasserfahrzeugen, insbesondere auch für den Telefoniebetrieb, bestimmt ist, geht ebenfalls von der Schwierigkeit aus, daß wegen der mangelnden Übertragungsfähigkeit von Wasser für elektromagnetische Wellen die üblichen Techniken der Funknachrichtenübermittlung nicht anwendbar sind (J. Matauschek "Einführung in die Ultraschalltechnik" VEB Verlag Technik Berlin, 2. Auflage, August 1961, Seite 318 bis 320). Durch dieses Verfahren kann insbesondere auch eine Informationsübertragung zwischen getauchten U-Booten erfolgen.

Das bekannte Verfahren beruht auf einer Amplitudenmodulation des Ultraschallträgersignals mit dem zu übertragenden Informationssignal. Bei diesem Verfahren entspricht also dem zu übertragenden Informationssignal ein bestimmter Amplitudenhub des Ultraschallträgersignals. Dabei tritt allerdings die Schwierigkeit auf, daß oberhalb eines bestimmten Amplitudenwertes des Ultraschallträgersignals eine Kavitation des ultraschalleitenden Mediums, also dessen Zerreißen unter Bildung kleiner Bläschen, eintritt, was zu einer erheblichen Störung der Übertragung des Informationssignals führt. Wenn andererseits die Amplitude des Ultraschallträgersignals auf einen unterhalb dieser Kavitationsgrenze liegenden Wert beschränkt würde, steht für die Modulation nur ein entsprechend beschränkter Amplitudenhub zur Verfügung, so daß insbesondere die einem im Verhältnis zum maximalen Amplitudenhub kleinen Amplitudenhub entsprechenden Anteile des Informationssignals mit wachsender Entfernung zwischen dem Sender und dem Empfänger einen sehr schlechten Signalabstand gegenüber Störungen aufweisen.

Die Verwendung von Ultraschall zur Informationsübertragung ist beispielsweise auch bei Fernbedienungen für Fernsehempfänger bekannt. Hierbei müssen aber nur einfache Schaltsignale für Kanäle und Steuersignale für die Einstellung von Ton und Bild übertragen werden, so daß die für die Übertragung eines beliebigen Informationssignals mit einem komplizierten und differenzierten Informationsinhalt auftretenden Anforderungen sich dabei gar nicht stellen.

Der Erfindung liegt die Aufgabe zugrunde, ein bezüglich seiner Reichweite und Störsicherheit verbessertes Verfahren der eingangs genannten Art und eine Vorrichtung zur Durchführung dieses Verfahrens anzugeben, welche insbesondere zur Unterwasserverständigung zwischen Tauchern geeignet sind.

Erfindungsgemäß wird diese Aufgabe hinsichtlich des Verfahrens dadurch gelöst, daß die Modulation des Ultraschallträgersignals mit dem Informationssignal als Pulsdauermodulation ausgeführt wird, bei der die Pulsvorderflanken mit dem Informationssignal moduliert werden und der feste Wert der Pulsamplitude des modulierten Ultraschallträgersignals unterhalb der Kavitationsgrenze des Mediums liegt.

Bei dem erfindungsgemäßen Verfahren nähert man sich also der Kavitationsgrenze des der Informationsübertragung dienenden Mediums Wasser nur so weit an, wie es für die gewünschte Reichweite der Informationsübertragung erforderlich ist. Dadurch wird einerseits ein Optimum an Ultraschallenergie abgestrahlt und andererseits das störende Auftreten der Kavitation vermieden. Wegen der angewendeten Modulationsart, bei der das Informationssignal nicht einer Amplitude des Ultraschallträgersignals, sondern dem Zeitverlauf der durch die Pulsmodulation gebildeten Impulse des Ultraschallträgersignals entspricht, spielen Amplitudeneffekte, die die ungestörte Übertragung von Teilen des Informationssignals beeinträchtigen könnten, keine Rolle. Die zu übertragende Information wird mit einer unterhalb der Kavitationsgrenze des Mediums liegenden Intensität abgestrahlt, wobei für alle Teile des Informationssignals die gleiche maximale Ultraschallintensität bei der Übertragung zur Verfügung steht. Hierdurch ergibt sich eine verhältnismäßig große Reichweite bei hoher Störunempfindlichkeit. Die Pulsmodulation, also das einfache Ein- und Ausschalten des ausgestrahlten Ultraschallträgersignals, erweist sich damit als überraschend vorteilhaft für eine störungsarme Informationsübertragung mit großer Reichweite.

Es hat sich gezeigt, daß beispielsweise bei Ultraschallfrequenzen von 100 kHz aufwärts Reichweiten von einigen Kilometern möglich sind. Das erfindungsgemäße Verfahren eignet sich also insbesondere für die Verständigung von Tauchern unter Wasser. Dabei ist diese Anwendung der Erfindung nicht auf Trockentaucher beschränkt, in deren Anzügen die notwendigen Einrichtungen zur Durchführung des Verfahrens untergebracht werden können. Denn es können auch Naßtaucher, also Sporttaucher, mit geeigneten Einrichtungen wie einem Kehlkopfmikrofon oder einem zum Hineinsprechen geeignet ausgebildeten Mundstück versehen werden, um mit Hilfe des erfindungsgemäßen Verfahrens unter Wasser in Sprachverbindung treten zu können. Ein weiterer Vorteil besteht darin, daß sich die Winkelausdehnung des von dem Sender ausgestrahlten Schallfeldes durch geeignete Formgebung des Ultraschallgebers leicht einstellen läßt. Je nach der gewünschten Anwendung können also sowohl eng begrenzte Richtstrecken zwischen Sender und Empfänger als auch winkelmäßig ausgedehnte Schallfelder aufgebaut werden. Ein weiteres Beispiel für die Anwendung des erfindungsgemäßen Verfahrens besteht in der Übertragung von Meßwerten, die von im Wasser angeordneten Sensoren geliefert werden, an eine außerhalb des Wassers angeordnete Auswertestation, beispielsweise eine Bohrinsel, wobei jedoch der Empfänger der Auswertestation ebenfalls im Wasser angeordnet ist.

Besonders zweckmäßig ist dabei die verwendete Art der Pulsdauermodulation, bei der die Pulsvorderflanken mit dem Informationssignal moduliert werden. Diese Maßnahme trägt dem Umstand Rechnung, daß die bekannten Ultraschallgeber üblicherweise eine gewisse Nachschwingdauer aufweisen, so daß die Pulsvorderflanke der Ultraschallimpulse mit besserer Auflösung bestimmt ist als die Pulshinterflanke.

Die verschiedenen Arten der Pulsmodulation sind beispielsweise in E. Hölzler und H. Holzwarth "Theorie und Technik der Pulsmodulation" Springer-Verlag 1957 abgehandelt. Hierunter läßt sich die Pulsdauermodulation, bei der das Informationssignal durch Impulse einer vorgegebenen Frequenz, deren Impulsdauer dem abgetasteten Amplitudenwert des Informationssignals entspricht, dargestellt wird, mit besonders geringem Aufwand ausführen. Beispielsweise bedarf es zur Bildung des impulsdauermodulierten Ultraschallträgersignals nur eines Vergleichs zwischen dem Informationssignal und einem Sägezahnsignal fest vorgegebener Abtastfrequenz, während für die Demodulation im Empfänger das dem pulsdauermodulierten Ultraschallträgersignal entsprechende elektrische Signal des Empfängers nur in einem Tiefpaßfilter zur Regeneration des Informationssignals geglättet werden muß.

Eine weitere Verbesserung der Störsicherheit des erfindungsgemäßen Verfahrens erfolgt in einer vorteilhaften Ausführungsform dadurch, daß das Informationssignal quantisiert wird. Bekanntlich wird durch die Quantisierung die Korrekturfähigkeit und Störsicherheit des dann zur Übertragung dem Ultraschallträger aufmodulierten quantisierten Informationssignals weiter gesteigert, während die durch die Quantisierung herbeigeführte geringfügige Verzerrung des Informationssignals vernachlässigbar bleibt.

Wenngleich das erfindungsgemäße Verfahren für jede Art von Informationssignalen geeignet ist, für deren Abtastung eine mit der Trägheit verfügbarer Ultraschallgeber verträgliche Abtastfrequenz ausreicht, ist das erfindungsgemäße Verfahren vorteilhaft auf den Fall anwendbar, daß das Informationssignal ein Sprachsignal ist. Jedenfalls sind ohne weiteres Ultraschallgeber verfügbar, deren Trägheit eine für Telefoniezwecke ausreichende Abtastfrequenz gestattet.

Das erfindungsgemäße Verfahren verbessert also die der Funkübertragung nicht zugängliche Nachrichtenübermittlung unter Wasser. Insbesondere eignet es sich wegen des geringen vorrichtungsmäßigen Aufwandes und seiner Reichweite für die Verständigung von Tauchern unter Wasser.

Im Rahmen der Erfindung ist insbesondere auch vorgesehen, daß sowohl an dem ersten als auch dem zweiten Ort je ein Sender und ein Empfänger sowie zwei Ultraschallträgersignale unterschiedlicher Frequenz vorgesehen sind, von denen das eine zur Informationsübertragung vom Sender des ersten zum Empfänger des zweiten Ortes und das andere vom Sender des zweiten zum Empfänger des ersten Ortes verwendet wird. Durch die Verwendung zweier Ultraschallträgersignale unterschiedlicher Frequenz kann also eine gleichzeitige Informationsübertragung in beiden Richtungen zwischen dem ersten und dem zweiten Ort stattfinden. Insbesondere ergibt sich hierzu die Möglichkeit für einen Vollduplex-Sprachverkehr.

Eine zur Lösung der der Erfindung zugrundeliegenden Aufgabe dienende Vorrichtung mit einem Sender, der einen Ultraschallgeber, eine ein der Anregung des Ultraschallgebers zur Aussendung eines Ultraschallträgersignals vorgegebener Frequenz dienendes Treibersignal erzeugende Einrichtung und einen Modulator zur Bildung eines modulierten Ultraschallträgersignals fester Amplitude durch Modulation des Treibersignals mit einem Informationssignal aus einer Informationssignalquelle aufweist, und mit einem Empfänger, der einen Ultraschallaufnehmer, einen Demodulator für das von dem Ultraschallaufnehmer gelieferte Ausgangssignal und eine Wiedergabeeinrichtung für das demodulierte Ausgangssignal aufweist, zeichnet sich dadurch aus, daß der Modulator und der Demodulator ein die Pulsvorderflanken modulierender bzw. demodulierender Pulsmodulator bzw. Pulsdemodulator mit konstanter Pulsamplitude ist, und daß der Ultraschallgeber und/oder der Ultraschallaufnehmer an seiner ultraschallabstrahlenden bzw. -aufnehmenden Fläche mit einer ultrascallschwingungsdämpfenden Koppelschicht versehen ist.

Durch diese Dämpfungsschicht wird das trägheitsbedingte Nachschwingen des Ultraschallgebers beim Abschalten seines Treibersignals stark unterdrückt, was das Auflösungsvermögen der Abtastung und auch das Signal/Rauschverhältnis weiter verbessert.

Die erfindungsgemäße Vorrichtung beruht im übrigen wesentlich darauf, das Informationssignal durch eine amplitudenunabhängige Modulation des Ultraschallträgersignals zu übertragen. Die konstante Pulsamplitude der unter der Steuerung durch den Modulator erzeugten Ultraschallträgersignalimpulse kann somit an die gewünschte Reichweite angepaßt und entsprechend den Reichweiteanforderungen bis auf einen maximalen Wert eingestellt werden, der in dem der Informationsübertragung dienenden Medium gerade noch keine Kavitation auslöst. Als Pulsdauermodulatoren kommen also alle Arten in Betracht, deren Modulation auf einer Beeinflussung der Anstiegs- bzw. Abfallzeit der Vorderflanken der Impulsamplituden beruht, während die Impulshöhe unverändert bleibt. Zusätzlich können vor der Modulation Schritte der Quantisierung der Amplitude des Informationssignals und/oder der Kodierung vorgesehen sein können. Zahlreiche Ausführungsformen derartiger Pulsmodulatoren mit oder ohne Quantisierung bzw. Kodierung sind wohlbekannt. Insbesondere werden derartige Bausteine in digitalen Fernsprechnetzen verwendet, wo sie unter der Bezeichnung "CODEC" geläufig sind. Die erfindungsgemäße Vorrichtung läßt sich also mit herkömmlichen, leicht verfügbaren Bausteinen realisieren.

Der Aufbau derartiger Pulslängenmodulatoren bzw. -demodulatoren ist sehr einfach. In ersterem braucht lediglich das Informationssignal mit einem Sägezahnsignal fester und hinreichend hoher Abtastfrequenz verglichen zu werden, um jeder Abtastamplitude des Informationssignals einen Ultraschallträgersignalimpuls einer der abgetasteten Amplitude entsprechenden Zeitdauer zuzuordnen. Aus dieser Folge von übertragenen, pulslängenmodulierten Ultraschallimpulsen wird dann in dem Impulslängendemodulator durch einfache Glättung mittels eines Tiefpaßfilters das Informationssignal regeneriert.

Die Vorteile einer digitalen Übertragung des Informationssignals werden in einer zweckmäßigen Weiterbildung der erfindungsgemäßen Vorrichtung dadurch erhalten, daß dem Pulslängenmodulator ein Analog/Digital-Wandler vorgeschaltet und dem Pulslängendemodulator ein Digital/Analog-Wandler nachgeschaltet ist. Auf dem Übertragungsweg wird also das Informationssignal in entsprechend dem zugeordneten Digitalwert quantisierter Form übertragen, wobei dieser Digitalwert in kodierter Form vorliegen kann, wie es beispielsweise bei der Pulskodemodulation oder auch bei der Deltamodulation der Fall ist.

Eine speziell für die Sprachübertragung geeignete Ausführungsform der erfindungsgemäßen Vorrichtung zeichnet sich dadurch aus, daß der Sender ein Mikrofon zur Lieferung eines das Informationssignal darstellenden Sprachsignals aufweist. Die Vorrichtung kann also unmittelbar für einen Telefoniebetrieb verwendet werden. Dementsprechend weist dann die Wiedergabeeinrichtung des Empfängers einen elektroakustischen Wandler zur Wiedergabe des ein Sprachsignal darstellenden demodulierten Ausgangssignals auf.

Insbesondere ist im Rahmen der Erfindung auch vorgesehen, daß je ein auf voneinander verschiedene Frequenzen der Ultraschallträgersignale eingestellter Sender und Empfänger an der Ausrüstung von Tauchern angeordnet ist. Damit können sich mit Hilfe der erfindungsgemäßen Vorrichtung Taucher unter Wasser im Vollduplex-Sprachbetrieb untereinander verständigen. Besonders einfach erweist sich die Anordnung der Sender und Empfänger im Falle der Ausrüstung von Trockentauchern, wo Sender und Empfänger beispielsweise am Helm oder auch an sonstigen geeigneten Bereichen der Ausrüstung angeordnet werden können. Auch für Sporttaucher, die mit einer Naßtauchausrüstung arbeiten, ist die erfindungsgemäße Vorrichtung geeignet. Besonderheiten ergeben sich hierbei zwar hinsichtlich des mit dem Sender verbundenen Mikrofons. Da Naßtaucher nicht daran gehindert sind, in das Mundstück ihrer Atemmaske hineinzusprechen, kann beispielsweise das Mikrofon dort angeordnet werden. Alternativ wäre auch die Benutzung eines Kehlkopfmikrofons möglich.

Weitere Merkmale, Einzelheiten und Vorteile der Erfindung ergeben sich aus der folgenden Beschreibung und der Zeichnung, auf die bezüglich einer erfindungswesentlichen Offenbarung aller im Text nicht erwähnten Einzelheiten ausdrücklich hingewiesen wird. Hierin zeigen:
- Fig. 1: ein Blockschaltbild einer Vorrichtung zum Übertragen eines Informationssignals, und
- Fig. 2: eine Erläuterung der Arbeitsweise eines in dem Blockschaltbild von Fig. 1 vorgesehenen Pulsmodulators.

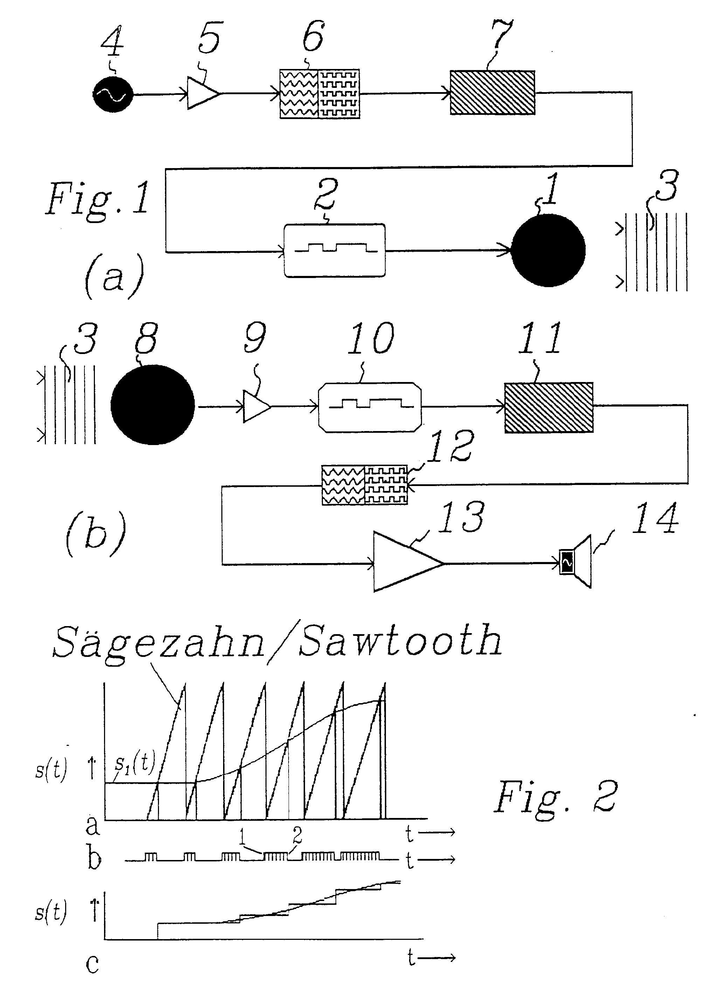

Gemäß Fig. 1 (a) weist ein dort dargestellter Sender einen Ultraschallgeber 1 auf, der beispielsweise durch eine mit Elektroden versehene piezoelektrische Quarzscheibe gebildet ist. An die Elektroden ist eine ein elektrisches Treibersignal für den Ultraschallgeber 1 erzeugende Einrichtung 2 angeschlossen, wodurch der Ultraschallgeber 1 zur Aussendung eines in seiner Frequenz der Frequenz des elektrischen Treibersignals entsprechenden Ultraschallträgersignals erregt wird. Das elektrische Treibersignal ist in der nachstehend im einzelnen beschriebenen Weise mit einem Informationssignal moduliert, so daß das von dem Ultraschallgeber 1 ausgestrahlte Ultraschallträgersignal 3 eine entsprechende Modulation aufweist.

In dem dargestellten Ausführungsbeispiel handelt es sich bei dem Informationssignal um ein von einem Mikrofon 4 erzeugtes Sprachsignal, das nach Verstärkung in einem Verstärker 5 von einem Analog/Digital-Wandler 6 digitalisiert wird.Das in dem Analog/Digital-Wandler 6 quantisierte Sprachsignal wird in einem Pulslängenmodulator 7 in ein pulslängenmoduliertes Ein/Ausschaltsignal für die Treibereinrichtung 2 umgewandelt. Hierdurch wird das Ultraschallträgersignal 3 des Ultraschallgebers 1 in der Form von Ultraschallimpulsen mit der Pulslänge des Modulationssignals entsprechender Pulslänge moduliert. Die Pulsamplitude des modulierten Ultraschallträgersignals bleibt dabei gleich und ist auf einen festen Wert eingestellt, der unterhalb der Kavitationsgrenze des Mediums liegt, in dem sich das modulierte Ultraschallträgersignal 3 ausbreitet. Hierdurch wird vermieden, daß in dem Medium die oberhalb eines bestimmten Amplitudenwertes auftretenden Kavitationsbläschen entstehen, welche die Informationsübertragung stören würden.

Der Vorgang der Pulsdauermodulation ist anhand von Fig. 2 näher erläutert. Wie aus Fig. 2 (a) hervorgeht, wird das Informationssignal s₁(t), das hier der Einfachheit halber als analoges Signal, also ohne Durchgang durch den Analog/ Digital-Wandler 6,dargestellt ist, in dem Pulslängenmodulator 7 mit einer Sägezahnschwingung verglichen, deren Frequenz so hoch gewählt wird, daß eine für die gewünschte Übertragungsqualität ausreichende Abtastdichte des Informationssignals s₁(t) erreicht wird. Durch diese Abtastung entsteht ein in Fig. 2 (b) dargestelltes pulslängenmoduliertes Signal konstanter Amplitude, wobei die Anstiegsflanke dieser Impulse konstanter Amplitude jeweils mit der vorgegebenen Nulldurchgangszeit der Anstiegsflanke der Sägezahnschwingung zusammenfällt, während die Abfallflanke der Impulse konstanter Amplitude jeweils durch den Schnittpunkt der ansteigenden Flanke der Sägezahnschwingung mit dem Informationssignal s₁(t) festgelegt ist. Damit entspricht die Pulslänge des gemäß Fig. 2 (b) erzeugten pulslängenmodulierten Signals gerade der jeweils abgetasteten Amplitude des Informationssignals s₁(t). Das pulslängenmodulierte Signal von Fig. 2 (b) dient sodann als Schaltsignal für die Treibereinrichtung 2, so daß das modulierte Ultraschallträgersignal 3 eine ebensolche Impulslängenmodulation aufweist.

Wie weiter aus Fig. 1 (b) hervorgeht, wird das durch ein mit dem Ultraschallgeber 1 akustisch gekoppeltes ultraschallübertragendes Medium übertragene pulslängenmodulierte Ultraschallträgersignal 3 von einem mit dem Medium akustisch gekoppelten Ultraschallaufnehmer 8 eines Empfängers aufgenommen, wobei der Ultraschallaufnehmer 8 ebenso wie der Ultraschallgeber 1 durch eine mit Elektroden versehene piezoelektrische Quarzscheibe gebildet sein kann. Das an den Elektroden des Ultraschallaufnehmers 8 auftretende, dem empfangenen modulierten Ultraschallträgersignal 3 entsprechende elektrische Ausgangssignal wird in einem Vorverstärker 9 verstärkt und in einem nachgeschalteten Verstärker 10 einer Impulsformung unterzogen. In einem von dem Ausgangssignal des Verstärkers 10 beaufschlagten Demodulator 11 wird ein dem digitalisierten Ausgangssignal des Analog/Digital-Wandlers 6 im Sender entsprechendes digitales Demodulationssignal gewonnen, das in einem Digital/Analog-Wandler 12 in ein dem von dem Mikrofon 4 des Senders erzeugten Informationssignal entsprechendes analoges Signal umgewandelt wird. Das analoge Ausgangssignal des Digital/Analog-Wandlers 12 wird sodann in einem Leistungsverstärker 13 hinreichend verstärkt, um durch einen daran angeschlossenen elektroakustischen Wandler 14, beispielsweise einen Lautsprecher oder einen Kopfhörer, hörbar gemacht zu werden.

Der Vorgang der Demodulation ist in Fig. 2 (c) wiederum für den vereinfachten Fall, bei dem keine Digitalisierung vorgenommen wird, dargestellt. Dann braucht lediglich das aus dem Verstärker 10 erhaltene impulsgeformte Signal, das in seiner Form dem Signal von Fig. 2 (b) entspricht, durch den in der Form eines Tiefpaßfilters ausgebildeten Demodulator 11 geglättet zu werden, um gemäß der Darstellung von Fig. 2 (c) die Signalform des Informationssignals wiederzugewinnen.

Bekanntlich weisen Ultraschallgeber und auch Ultraschallaufnehmer eine gewisse Trägheit auf, was sich in einem Nachschwingen nach dem Abschalten ihrer Erregung äußert. Dieses Nachschwingen begrenzt die Auflösung zwischen den einzelnen Ultraschallimpulsen. Zweckmäßigerweise kann daher zumindest zwischen der schallabstrahlenden Fläche des Ultraschallgebers 1 und dem damit gekoppelten Medium eine ultraschallschwingungsdämpfende Koppelschicht vorgesehen sein. Hierdurch kann die unerwünschte Nachschwingung weitgehend unterdrückt werden. Der Unterdrückungseffekt kann noch dadurch verstärkt werden, daß auch auf der Empfängerseite der Ultraschallaufnehmer mit einer entsprechenden dämpfenden Koppelschicht versehen ist.

Bei einer Anwendung der Vorrichtung für einen Vollduplex-Sprachverkehr zwischen Tauchern ist jeder Taucher mit einem Sender und Empfänger gemäß Fig. 2 (a) und (b) versehen, wobei beispielsweise der Ultraschallgeber 1 und der Ultraschallaufnehmer 8 an dem Taucherhelm oder der Tauchermaske in Kontakt mit dem umgebenden Wasser angeordnet sind. Die Frequenzen der Ultraschallträgersignale der Sender werden verschieden gewählt, damit gleichzeitig in beiden Richtungen gesprochen werden kann.

Neben der vorstehend erwähnten trägheitsbedingten Nachschwingzeit tritt auch eine trägheitsbedingte Einschwingzeit auf, die jedoch kleiner ist als die Nachschwingzeit. Daher sind die ansteigenden Impulsflanken, also die Vorderflanken, zur Modulation besser geeignet, als die abfallenden Impulsflanken. Die ultraschallschwingungsdämpfenden Koppelschichten ermöglichen gleichzeitig auch eine Dämpfung der Einschwingzeiteffekte.

## Patentansprüche

1. Verfahren zum Übertragen eines Informationssignals unter Wasser von einem an einem ersten Ort befindlichen Sender zu einem an einem davon entfernten zweiten Ort befindlichen Empfänger, bei dem in dem Sender durch Modulation eines Ultraschallträgersignals vorgegebener Frequenz mit dem Informationssignal ein an das Wasser abgegebenes moduliertes Ultraschallträgersignal mit einem festen Wert der Amplitude gebildet und in dem Empfänger das aus dem Wasser aufgenommene, modulierte Ultraschallträgersignal zur Rückgewinnung des Informationssignals demoduliert wird, **dadurch gekennzeichnet**, daß die Modulation des Ultraschallträgersignals mit dem Informationssignal als Pulsdauermodulation ausgeführt wird, bei der die Pulsvorderflanken mit dem Informationssignal moduliert werden und der feste Wert der Pulsamplitude des modulierten Ultraschallträgersignals unterhalb der Kavitationsgrenze des Mediums liegt.

2. Verfahren nach Anspruch 1, **dadurch gekennzeichnet,** daß das Informationssignal quantisiert wird.

3. Verfahren nach Anspruch 1 oder 2, **dadurch gekennzeich****net**, daß das Informationssignal ein Sprachsignal ist.

4. Verfahren nach einem der Ansprüche 1 bis 3, **dadurch** **gekennzeichnet**, daß sowohl an dem ersten als auch dem zweiten Ort je ein Sender und ein Empfänger sowie zwei Ultraschallträgersignale unterschiedlicher Frequenz vorgesehen sind, von denen das eine zur Informationsübertragung vom Sender des ersten zum Empfänger des zweiten Ortes und das andere vom Sender des zweiten zum Empfänger des ersten Ortes verwendet wird.

5. Vorrichtung zur Durchführung des Verfahrens nach einem der Ansprüche 1 bis 4 mit einem Sender, der einen Ultraschallgeber, eine ein der Anregung des Ultraschallgebers zur Aussendung eines Ultraschallträgersignals vorgegebener-Frequenz dienendes Treibersignal erzeugende Einrichtung und einen Modulator zur Bildung eines modulierten Ultraschallträgersignals fester Amplitude durch Modulation des Treibersignals mit einem Informationssignal aus einer Informationssignalquelle aufweist, und mit einem Empfänger, der einen Ultraschallaufnehmer, einen Demodulator für das von dem Ultraschallaufnehmer gelieferte Ausgangssignal und eine Wiedergabeeinrichtung für das demodulierte Ausgangssignal aufweist, **dadurch gekennzeich****net**, daß der Modulator (7) und der Demodulator (11) ein die Pulsvorderflanken modulierender bzw. demodulierender Pulslängenmodulator bzw. Pulslängendemodulator mit konstanter Pulsamplitude ist und daß der Ultraschallgeber (1) und/oder der Ultraschallaufnehmer (8) an seiner ultraschallabstrahlenden bzw. -aufnehmenden Fläche mit einer ultraschallschwingungsdämpfenden Koppelschicht versehen ist.

6. Vorrichtung nach Anspruch 5, **dadurch gekennzeichnet**, daß dem Pulslängenmodulator (7) ein Analog/Digital-Wandler (6) vorgeschaltet und dem Pulslängendemodulator (11) ein Digital/Analog-Wandler (12) nachgeschaltet ist.

7. Vorrichtung nach Anspruch 5 oder 6, **dadurch gekenn****zeichnet,** daß der Sender ein Mikrofon (4) zur Lieferung eines das Informationssignal darstellenden Sprachsignals aufweist.

8. Vorrichtung nach einem der Ansprüche 5 bis 7, **dadurch** **gekennzeichnet,** daß die Wiedergabeeinrichtung des Empfängers einen elektroakustischen Wandler (14) zur Wiedergabe des ein Sprachsignal darstellenden demodulierten Ausgangssignals aufweist.

9. Vorrichtung nach einem der Ansprüche 5 bis 8, **dadurch** **gekennzeichnet**, daß je ein auf voneinander verschiedene Frequenzen der Ultraschallträgersignale eingestellter Sender (1 bis 7) und Empfänger (8 bis 14) an der Ausrüstung von Tauchern angeordnet ist.

## Claims

1. Method for transmitting an information signal under water from a transmitter located at a first point to a receiver located at a second point, remote therefrom, in the case of which method a modulated ultrasound carrier signal, which is emitted to the water and has a fixed amplitude value, is formed in the transmitter by modulation of an ultrasound carrier signal at a predetermined frequency with the information signal, and the modulated ultrasound carrier signal received from the water is demodulated in the receiver in order to recover the information signal, characterized in that the modulation of the ultrasound carrier signal with the information signal is carried out as pulse duration modulation, in the case of which the pulse front edges are modulated with the information signal and the fixed value of the pulse amplitude of the modulated ultrasound carrier signal is below the cavitation limit of the medium.

2. Method according to Claim 1, characterized in that the information signal is quantized.

3. Method according to Claim 1 or 2, characterized in that the information signal is a voice signal.

4. Method according to one of Claims 1 to 3, characterized in that in each case one transmitter and one receiver as well as two ultrasound carrier signals of different frequency are provided both at the first point and at the second point, of which ultrasound carrier signals one is used for information transmission from the transmitter at the first point to the receiver at the second point, and the other is used from the transmitter at the second point to the receiver at the first point.

5. Device for carrying out the method according to one of Claims 1 to 4, having a transmitter which has an ultrasound transmitter, a device which produces a driver signal which is used for exciting the ultrasound transmitter to transmit an ultrasound carrier signal at a predetermined frequency, and a modulator in order to form a modulated ultrasound carrier signal of fixed amplitude by modulation of the driver signal with an information signal from an information signal source, and having a receiver which has an ultrasound receiver, a demodulator for the output signal supplied from the ultrasound receiver, and a reproduction device for the demodulated output signal, characterized in that the modulator (7) and the demodulator (11) are a pulse-length modulator or a pulse-length demodulator respectively, which modulates or demodulates respectively the pulse front edges and has a constant pulse amplitude, and in that the ultrasound transmitter (1) and/or the ultrasound receiver (8) is provided on its surface which respectively emits or receives ultrasound with a coupling layer which damps ultrasound oscillation.

6. Device according to Claim 5, characterized in that an analogue/digital converter (6) is connected upstream of the pulse-length modulator (7), and a digital/analogue converter (12) is connected downstream of the pulse-length demodulator (11).

7. Device according to Claim 5 or 6, characterized in that the transmitter has a microphone (4) for supplying a voice signal which represents the information signal.

8. Device according to one of Claims 5 to 7, characterized in that the reproduction device of the receiver has an electroacoustic transducer (14) for reproducing the demodulated output signal which represents a voice signal.

9. Device according to one of Claims 5 to 8, characterized in that in each case one transmitter (1 to 7) and receiver (8 to 14) which is set to mutually different frequencies of the ultrasound carrier signals is arranged on the equipment of divers.

## Revendications

1. Procédé pour la transmission d'un signal d'information, sous l'eau, depuis un émetteur se trouvant en une première position, à un récepteur, se trouvant en une deuxième position, éloignée de la première, dans lequel, dans l'émetteur, par modulation d'un signal porteur à ultra-sons de fréquence prédéterminé, à l'aide du signal d'information, est formé un signal porteur à ultra-sons modulé, envoyé dans l'eau, ayant une amplitude fixée, et le signal porteur à ultra-sons, modulé, capté dans l'eau, étant démodulé dans le récepteur, pour récupérer le signal d'information, caractérisé en ce que la modulation du signal porteur à ultra-sons est effectuée en modulation de durée d'impulsion, par le signal d'information, les flancs avant d'impulsion étant modulés par le signal d'information et la valeur fixe de l'amplitude d'impulsion du signal porteur à ultra-sons modulé se situant au-dessous de la limite de cavitation du milieu.

2. Procédé selon la revendication 1, caractérisé en ce que le signal d'information est quantifié.

3. Procédé selon la revendication 1 ou 2, caractérisé en ce que le signal d'information est un signal audio.

4. Procédé selon l'une des revendications 1 à 3, caractérisé en ce que, tant à la première position qu'également à la deuxième position, sont respectivement prévus un émetteur et un récepteur, ainsi que deux signaux porteurs à ultra-sons de fréquences différentes, dont l'un est utilisé pour la transmission de l'information, entre l'émetteur de première position et récepteur de la deuxième position et l'autre est utilisé pour la transmission d'information entre l'émetteur de deuxième position et récepteur de première position.

5. Dispositif pour mettre en oeuvre le procédé selon l'une des revendications 1 à 4, avec un émetteur, comportant un transducteur à ultra-sons, un dispositif produisant un signal d'attaque, servant à l'excitation du transducteur à ultra-sons, pour émettre un signal porteur à ultra-sons de fréquence prédéterminée, et un modulateur, pour former un signal porteur à ultra-sons modulé d'amplitude fixe, par modulation du signal d'attaque à l'aide d'un signal d'information venant de la source de signaux d'information, et avec un récepteur, comportant un récepteur à ultra-sons, un démodulateur pour le signal de sortie fourni par le récepteur à ultra-sons, et un dispositif de reproduction, pour le signal de sortie démodulé, caractérisé en ce que le modulateur (7) et le démodulateur (11) sont un modulateur de longueur d'impulsion à fonction de modulation des flancs avant d'impulsion, respectivement un démodulateur de longueur d'impulsion, à fonction de démodulation des flancs avant d'impulsion, travaillant à amplitude constante, et en ce que le transducteur à ultra-sons (1) et/ou le récepteur à ultrasons (8) sont pourvus sur leur surface rayonnant ou capteur les ultra-sons d'une couche de couplage, amortissant les oscillations par ultra-sons.

6. Dispositif selon la revendication 5, caractérisé en ce qu'en amont du modulateur de longueur d'impulsion (7) est mis en circuit un convertisseur analogique/numérique (6) et un convertisseur numérique/analogique (12) est mis en circuit en aval du démodulateur de longueur d'impulsion (11).

7. Dispositif selon la revendication 5 ou 6, caractérisé en ce que l'émetteur comporte un microphone (4) destiné à fournir un signal audio constituant le signal d'information.

8. Dispositif selon l'une des revendications 5 à 7, caractérisé en ce que le dispositif de reproduction du récepteur comporte un convertisseur électroacoustique (14), pour reproduire le signal initial, démodulé, constituant un signal audio.

9. Dispositif selon l'une des revendications 5 à 8, caractérisé en ce que chacun des émetteurs (1 à 7) et récepteurs (8 à 14), réglé pour des fréquences de signaux porteurs à ultra-sons différentes les unes des autres, est disposé sur l'équipement de plongeurs.
